# FASCICULE DE BREVET EUROPEEN

(11) **EP 0 996 125 B1**
(45) Date de publication et mention de la délivrance du brevet: **18.05.2005**
(21) Numéro de dépôt: 98440234.7
(22) Date de dépôt: 23.10.1998
(51) Int. Cl.: G11B 15/10, G11B 19/16

(54) **Dispositif et procédé de commande pour controler le défilement et/ou la lecture d'un support**
Vorrichtung und Verfahren zur Steuerung der Abtastung und/oder Wiedergabe eines Mediums
Control apparatus and method for scanning and/or reproducing a medium

(43) Date de publication de la demande: 26.04.2000
(73) Titulaire: ALCATEL, 75008 Paris (FR)
(72) Inventeur: Schneider, Philippe, 67370 Truchtersheim (FR)
(74) Mandataire: Scheer, Luc

(56) Documents cités:
- EP-A- 0 441 556
- WO-A-95/28711
- US-A- 4 939 601
- US-A- 4 952 081
- US-A- 5 187 630

## Description

La présente invention concerne le domaine des systèmes de commande et de contrôle de fonctionnement d'appareils ou de dispositifs réalisant la mise en mouvement ou le défilement, notamment en vue de leur lecture, de supports, et a pour objet un dispositif de commande pour contrôler le déplacement, notamment le défilement, d'un support et/ou la lecture d'un support enregistré en fonction du temps.

Dans le cas notamment de la lecture ou de la relecture d'un support enregistré en fonction du temps ou à enregistrement progressif dans le temps (tel que par exemple un document audio ou vidéo), l'utilisateur a besoin de différentes commandes pour transmettre ses ordres au système, qui peut être de type analogique ou digital.

Le jeu de commandes le plus usité, et qui se retrouve par exemple sur les lecteurs audio ou vidéo, comprend cinq boutons d'appui (lecture à vitesse normale/arrêt/pause/avance rapide/retour rapide). Ce jeu de commandes de base est souvent complété par des commandes secondaires supplémentaires en vue de procurer un contrôle plus précis du défilement (boutons de défilement image par image, roue ou molette pour un défilement pas à pas) ou par combinaison des ordres issus de différentes commandes (exploration dans les deux sens de lecture).

Ces jeux de commandes précités sont satisfaisants pour des appareils et des systèmes de lecture destinés au grand public, dans lesquels les ordres de base (lecture, arrêt, retour) représentent souvent plus de 90 % des besoins et sont émis à une fréquence faible, comparativement au temps mis par l'appareil pour exécuter l'ordre de l'utilisateur, ces systèmes ou appareils de lecture disposant de panneaux de commande de grande taille et/ou de boîtiers de télécommande.

En outre, la fréquence d'émission d'ordres ou de commandes secondaires étant même plus faible que celle des ordres basiques précités, personne ne se préoccupant du temps, ni de l'effort intellectuel requis pour retrouver et pour actionner ces commandes pendant que les yeux sont fixés sur l'écran et non sur le panneau de commande.

Toutefois, des ordres et des commandes des types précités (basiques et secondaires) sont émis beaucoup plus fréquemment dans des tâches d'édition, de montage, de contrôle et plus généralement d'intervention sur le support considéré, qui ne correspondent pas à l'utilisation envisagée des appareils et systèmes de lecture courants actuels.

Ce besoin de commande précise et rapide du défilement et de la lecture du support en fonction de la prise en compte du contenu de l'enregistrement par l'utilisateur est actuellement satisfait par des circuits de contrôle dédicacés tel qu'une molette de commande ou bouton rotatif, plus connu sous la désignation "jog/shuttle wheel". Un tel dispositif peut effectivement émettre des séries d'ordres rapprochés sous l'action de la main de l'utilisateur, alors que ce dernier regarde continuellement l'écran.

Néanmoins, cette solution requiert des réalisations matérielles dédicacées complexes et relativement coûteuses.

En outre, toutes les réalisations connues précitées sont spécifiquement destinées à des supports ou des documents linéaires ou à lecture ou défilement dans une seule direction et ne peuvent être que difficilement adaptées à des supports ou des documents plans ou à lecture selon deux directions.

WO-A-95 28 711 divulgue un dispositif et procédé selon le préambule des revendications 1 et 8.

Le problème posé à la présente invention consiste notamment à fournir un dispositif et un procédé de commande offrant des possibilités de commandes précises et rapides et un confort d'utilisation au moins équivalents à ceux fournis par les boutons rotatifs ou molettes de commande précités, tout en ne nécessitant que des circuits simples et peu coûteux, en permettant d'utiliser des organes de commande traditionnels et/ou en autorisant une réduction de la taille des panneaux de commande.

En vue de résoudre le problème précité, la présente invention a pour objet un dispositif de commande pour contrôler le déplacement, notamment le défilement, d'un support et/ou la lecture d'un support enregistré en fonction du temps. Le dispositif comprend deux organes de commande à pression ou à contact ou un organe de commande à deux positions actives ou de contact, pour transmettre au dispositif assurant le défilement ou la lecture des ordres d'arrêt, de lecture, de défilement à une vitesse prédéterminée, ce dans deux directions opposées de défilement ou de lecture, les durées des appuis, contacts ou actions étant, en vue de la définition des ordres correspondants, comparées à deux valeurs seuil de durées prédéterminées, inférieure et supérieure, compatibles avec les temps d'exécution moyens d'utilisateurs humains. Un appui, contact ou action prolongé sur un des organes de commande, c'est-à-dire supérieur en durée à ladite valeur seuil supérieure, entraîne une variation positive continue de la vitesse de défilement ou de lecture dans la direction et le sens de défilement ou de lecture attribué à l'organe de commande actionné ou à la position atteinte par l'unique organe de commande, pendant toute la durée de l'appui, du contact ou de l'action, jusqu'à atteindre la vitesse maximale de défilement ou de lecture.

On notera que la lecture d'un support enregistré pourra s'effectuer soit en déplaçant le support, soit en déplaçant la tête de lecture, le support pouvant alors rester immobile.

L'organe ou les organes de commande pourront, par exemple, être constitué(s) par deux boutons à pression (figure 1 des dessins annexés), ayant chacun une position enclenchée ou active et une position relâchée, par un bouton pivotant ou inclinable à quatre ou huit positions dont seulement deux sont activables (figure 2 des dessins annexés), par une manette ou un levier de commande (plus connu sous la désignation anglaise "joystick") à deux positions actives, éventuellement à gradation (figures 3 et 4 des dessins annexés - vues de dessus), par des touches sensitives ou analogue.

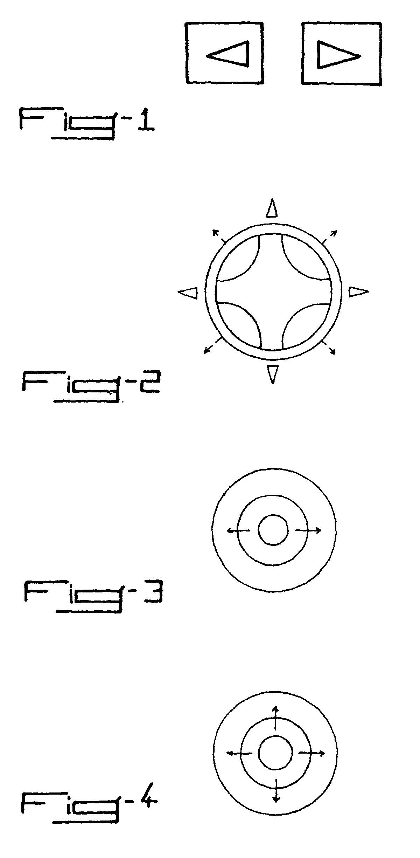

Pour permettre une interprétation simple et rapide des ordres de l'utilisateur, les durées des appuis, contacts ou actions sont, en vue de la définition des ordres correspondants, comparées à deux valeurs seuil de durées prédéterminées, inférieure et supérieure, compatibles avec des temps d'exécution moyens d'utilisateurs humains.

Avantageusement, un appui, contact ou action de durée inférieure à la valeur seuil inférieure entraîne un arrêt du défilement ou de la lecture quels que soient le sens et la vitesse de cette opération, et des appuis, contacts ou actions répétés de durée inférieure à la valeur seuil inférieure, entraîne un défilement ou une lecture pas à pas.

Cette dernière opération correspond, selon les cas d'application de l'invention, à un défilement du support unité de longueur par unité de longueur (l'unité de longueur étant par exemple définie par un champ de vision, un champ d'acquisition ou analogue), à une lecture groupe d'informations par groupe d'informations ou encore à une visualisation image par image.

On notera qu'en cas de lecture ou de défilement du support à une vitesse quelconque, l'arrêt interviendra quel que soit l'organe de commande actionné ou la position active atteinte pendant une durée inférieure à la valeur seuil inférieure (appui bref, tape rapide).

Conformément à l'invention, un appui, contact ou action prolongé sur un des organes de commande, c'est-à-dire supérieur en durée à la valeur seuil supérieure, entraîne une variation positive continue de la vitesse de défilement ou de lecture dans la direction et le sens de défilement ou de lecture attribué à l'organe de commande actionné ou à la position atteinte par l'unique organe de commande, pendant toute la durée de l'appui, du contact ou de l'action, ce au plus jusqu'à atteindre la vitesse maximale de défilement ou de lecture. La vitesse atteinte au moment du relâchement de l'appui, du contact ou de l'action sur l'organe de commande considéré est préférentiellement maintenue jusqu'à l'occurrence d'un(e) nouvel(le) appui, contact ou action au niveau de l'un quelconque des deux organes de commande ou de l'unique organe de commande.

On notera qu'un appui ou contact prolongé sur un organe de commande (ou dans une position active) auquel est attribué un sens contraire à celui du défilement ou de la lecture en cours, entraînera une décélération du défilement ou de la lecture, ce jusqu'à aboutir à un état d'arrêt et, en cas de maintien de l'appui au-delà, à un défilement ou une lecture à vitesse croissante dans le sens correspondant à l'organe de commande (ou à la position active), ce éventuellement jusqu'à atteindre la vitesse maximale.

La variation de la vitesse de défilement ou de lecture en fonction de la durée de l'appui ou du contact prolongé sur un des organes de commande ou dans une position active pourra suivre, par exemple, une fonction proportionnelle, quadratique, polynomiale, logarithmique ou autre.

Selon une caractéristique additionnelle de l'invention, il peut être prévu qu'en cas d'appui, de contact ou d'action prolongé(e) de la part de l'utilisateur, la variation de la vitesse de lecture ou de défilement soit également influencée par la valeur de la pression de l'appui de l'utilisateur ou par la localisation de la position active atteinte par l'organe de commande.

Dans le cadre d'une réalisation pratique de l'invention, les valeurs seuils pourront, par exemple, être choisies de telle manière que la valeur seuil inférieure soit environ égale à 300 ms et que la valeur seuil supérieure soit environ égale à 500 ms.

La présente invention a également pour objet un procédé de commande du défilement et/ou de la lecture d'un support, notamment d'un document audio ou vidéo, ce procédé consistant à recueillir les instructions de l'utilisateur sous forme d'appuis sur exactement deux organes de commande à pression ou contact, correspondant chacun à un sens de défilement ou de lecture du support, ou sur un organe de commande à exactement deux positions actives ou de contact, le procédé consistant également à transformer ces appuis en des ordres correspondants, du type arrêt, lecture ou défilement à vitesse normale ou standardisée, la détermination des types d'ordres étant réalisée par comparaison des durées des appuis avec des valeurs seuils inférieure et supérieure et par détermination de leur situation par rapport à ces deux valeurs seuils. Selon l'invention, le procédé consiste également à provoquer une variation positive continue de la vitesse de défilement ou de lecture dans la direction et le sens de défilement ou de lecture attribué à l'organe de commande actionné ou à la position atteinte par l'unique organe de commande, pendant toute la durée de l'appui, du contact ou de l'action, jusqu'à atteindre la vitesse maximale de défilement ou de lecture en cas d'appui, contact ou action prolongé sur un desdits organes de commande, pendant une durée supérieure à la valeur de seuil supérieure.

Les ordres sont transmis au dispositif assurant le défilement et/ou la lecture.

Dans le cadre de ce procédé, la détermination des types d'ordres est réalisée par comparaison des durées des appuis avec des valeurs seuils inférieure et supérieure et détermination de leur situation par rapport à ces deux valeurs seuils.

Conformément à un mode de réalisation préférentiel de l'invention, le procédé précité peut, plus précisément, consister en ce que :
- un appui d'une durée inférieure à la valeur seuil inférieure provoque un arrêt immédiat du défilement ou de la lecture,
- une suite d'appuis ayant chacun une durée inférieure à la valeur seuil inférieure entraîne un défilement ou une lecture pas à pas dans le sens attribué à l'organe de commande actionné ou à la position active atteinte par l'unique organe de commande,
- un appui d'une durée située dans l'intervalle compris entre les deux valeurs seuil entraîne une lecture ou un défilement à vitesse normale, dans le sens correspondant à l'organe de commande actionné ou à la position active atteinte par l'unique organe de commande, et,
- un appui d'une durée supérieure à la valeur seuil supérieure génère, aussi longtemps que dure l'appui, une variation positive continue dans le sens de défilement ou de lecture correspondant à l'organe de commande actionné ou à la position active atteinte, de la vitesse de défilement ou de lecture, ce au plus jusqu'à la vitesse maximale de défilement ou de lecture, la vitesse atteinte au moment du relâchement de l'appui étant conservée jusqu'à l'actionnement suivant d'un des organes de commande ou de l'unique organe de commande.

On notera que l'utilisation du dispositif de commande et les principes de mise en oeuvre du procédé selon l'invention sont extrêmement aisés à comprendre et à se rappeler, l'utilisateur reconnaissant inconsciemment un modèle de dynamiques simples liées aux lois de l'inertie qu'il rencontre dans sa vie de tous les jours (ainsi une force constante appliquée à un objet mobile accélère ou décélère la vitesse de mouvement de ce dernier). Grâce à la solution proposée par l'invention, l'utilisateur contrôle complètement, de manière simple et précise, avec seulement deux doigts, le défilement et/ou la lecture du support concerné sans qu'il ait à éloigner ses doigts des organes de commande ou son regard de l'écran de contrôle.

De plus, la solution proposée par l'invention est peu coûteuse, basée sur des principes intuitifs et aisée à apprendre et à retenir, même pour un utilisateur non technicien.

Le dispositif ou le procédé de commande selon l'invention peuvent être implémentés en relation avec des organes de commande déjà existants, tels que par exemple des boutons fléchés d'un clavier, des boutons graphiques sur un écran tactile ou encore les deux boutons de commande d'une souris, ce au moyen d'un circuit d'interface et d'un logiciel adapté, dont la réalisation pratique est à la portée de l'homme du métier.

Bien entendu, l'invention n'est pas limitée aux modes de réalisation décrits et représentés. Des modifications restent possibles, notamment du point de vue de la constitution des divers éléments ou par substitution d'équivalents techniques, sans sortir pour autant du domaine de protection de l'invention.

## Revendications

1. Dispositif de commande pour contrôler le déplacement, notamment le défilement, d'un support et/ou la lecture d'un support enregistré en fonction du temps, ledit dispositif comprenant exactement deux organes de commande à pression ou à contact ou un organe de commande à exactement deux positions actives ou de contact, pour transmettre au dispositif assurant le défilement ou la lecture des ordres d'arrêt, de lecture, de défilement à une vitesse prédéterminée, ce dans deux directions opposées de défilement ou de lecture, les durées des appuis, contacts ou actions étant, en vue de la définition des ordres correspondants, comparées à deux valeurs seuil de durées prédéterminées, inférieure et supérieure, compatibles avec les temps d'exécution moyens d'utilisateurs humains,
**caractérisé en ce qu'**un appui, contact ou action prolongé sur un des organes de commande, c'est-à-dire supérieur en durée à ladite valeur seuil supérieure, entraîne une variation positive continue de la vitesse de défilement ou de lecture dans la direction et le sens de défilement ou de lecture attribué à l'organe de commande actionné ou à la position atteinte par l'unique organe de commande, pendant toute la durée de l'appui, du contact ou de l'action, jusqu'à atteindre la vitesse maximale de défilement ou de lecture.

2. Dispositif de commande selon la revendication 1, **caractérisé en ce que** la vitesse atteinte au moment du relâchement de l'appui, du contact ou de l'action sur l'organe de commande considéré est maintenue jusqu'à l'occurrence d'un(e) nouvel(le) appui, contact ou action au niveau de l'un quelconque des deux organes de commande ou de l'unique organe de commande.

3. Dispositif de commande selon l'une quelconque des revendications 1 et 2, **caractérisé en ce qu'**à chaque organe de commande à pression ou contact ou à chaque position active / de contact de l'unique organe de commande est attribué(e) une direction et un sens de défilement ou de lecture.

4. Dispositif de commande selon l'une quelconque des revendications 1 à 3, **caractérisé en ce qu'**un appui, contact ou action de durée inférieure à la valeur seuil inférieure entraîne un arrêt du défilement ou de la lecture quels que soient le sens et la vitesse de cette opération.

5. Dispositif de commande selon l'une quelconque des revendications 1 à 4, **caractérisé en ce que** des appuis, contacts ou actions répétés de durée inférieure à la valeur seuil inférieure, entraîne un défilement ou une lecture pas à pas.

6. Dispositif de commande selon l'une quelconque des revendications 1 à 5, **caractérisé en ce que** la valeur seuil inférieure est environ égale à 300 ms et la valeur seuil supérieure est environ égale à 500 ms.

7. Dispositif de commande selon l'une quelconque des revendications 1 à 6, **caractérisé en ce que**, en cas d'appui, de contact ou d'action prolongé, la variation de la vitesse de lecture ou de défilement est également influencée par la valeur de la pression de l'appui de l'utilisateur ou par la localisation de la position active atteinte par l'organe de commande.

8. Procédé de commande du défilement et/ou de la lecture d'un support, notamment d'un document audio ou vidéo, ledit procédé consistant à recueillir les instructions de l'utilisateur sous forme d'appuis sur exactement deux organes de commande à pression ou contact, correspondant chacun à un sens de défilement ou de lecture du support, ou sur un organe de commande à exactement deux positions actives ou de contact, ledit procédé consistant également à transformer ces appuis en des ordres correspondants, du type arrêt, lecture ou défilement à vitesse normale ou standardisée, la détermination des types d'ordres étant réalisée par comparaison des durées des appuis avec des valeurs seuils inférieure et supérieure et par détermination de leur situation par rapport à ces deux valeurs seuils,
**caractérisé en ce qu'**il consiste également à provoquer une variation positive continue de la vitesse de défilement ou de lecture dans la direction et le sens de défilement ou de lecture attribué à l'organe de commande actionné ou à la position atteinte par l'unique organe de commande, pendant toute la durée de l'appui, du contact ou de l'action, jusqu'à atteindre la vitesse maximale de défilement ou de lecture en cas d'appui, contact ou action prolongé sur un desdits organes de commande, pendant une durée supérieure à ladite valeur de seuil supérieure.

9. Procédé de commande selon la revendication 8, **caractérisé en ce que**:
- un appui d'une durée inférieure à la valeur seuil inférieure provoque un arrêt immédiat du défilement ou de la lecture,
- une suite d'appuis ayant chacun une durée inférieure à la valeur seuil inférieure entraîne un défilement ou une lecture pas à pas dans le sens attribué à l'organe dé commande actionné où à la position active atteinte par l'unique organe de commande,
- un appui d'une durée située dans l'intervalle compris entre les deux valeurs seuil entraîne une lecture ou un défilement à vitesse normale, dans le sens correspondant à l'organe de commande actionné ou à la position active atteinte par l'unique organe de commande, et,
- un appui d'une durée supérieure à la valeur seuil supérieure génère, aussi longtemps que dure l'appui, une variation positive continue dans le sens de défilement ou de lecture correspondant à l'organe de commande actionné ou à la position active atteinte, de la vitesse de défilement ou de lecture, ce au plus jusqu'à la vitesse maximale de défilement ou de lecture, la vitesse atteinte au moment du relâchement de l'appui étant conservée jusqu'à l'actionnement suivant d'un des organes de commande ou de l'unique organe de commande.

## Patentansprüche

1. Vorrichtung zur Steuerung des Durchlaufs, insbesondere der Abtastung eines Mediums und/oder der Wiedergabe eines Mediums, das zeitabhängig aufgezeichnet wurde, wobei die genannte Vorrichtung exakt zwei Druck- oder Kontakt-Steuereinrichtungen oder eine Steuereinrichtung mit exakt zwei aktiven Stellungen oder Kontaktpositionen umfasst, die der Übertragung der Befehle zur Unterbrechung, zur Wiedergabe und zur Abtastung bei einer vorher festgelegten Geschwindigkeit an die Abtast- oder Wiedergabevorrichtung dienen, und dies in zwei entgegen gesetzte Abtastoder Wiedergaberichtungen, wobei die Dauer des Tastendrucks, der Betätigung oder der Aktivierung zur Definition des jeweiligen Befehls mit zwei vorher festgelegten Ansprechwerten verglichen wird, d.h. einem unteren und einem oberen Grenzwert, die auf die durchschnittlichen Ausführungszeiten eines Nutzers abgestimmt sind,
**dadurch gekennzeichnet, dass** ein/e anhaltende/r Tastendruck, Betätigung oder Aktivierung einer der Steuereinrichtungen, d.h. mit einer Dauer, die über dem genannten oberen Grenzwert liegt, eine positive stetige Veränderung der Abtast- oder Wiedergabegeschwindigkeit in der Abtast- oder Wiedergaberichtung bewirkt, die der jeweils betätigten Steuereinrichtung oder der jeweils erreichten Stellung der Einzelsteuereinrichtung zugeordnet ist, und dies während der gesamten Dauer des/der entsprechenden Tastendrucks, Betätigung oder Aktivierung bis zum Erreichen der maximalen Abtast- oder Wiedergabegeschwindigkeit.

2. Steuerungsvorrichtung gemäß Anspruch 1, **dadurch gekennzeichnet, dass** die Geschwindigkeit, die zum Zeitpunkt des Lösens des/der Tastendrucks, Betätigung oder Aktivierung der betreffenden Steuereinrichtung erreicht ist, solange aufrechterhalten wird, bis ein/e erneute/r Tastendruck, Betätigung oder Aktivierung einer der beiden Steuereinrichtungen oder der Einzelsteuereinrichtung erfolgt.

3. Steuerungsvorrichtung gemäß einem der Ansprüche 1 oder 2, **dadurch gekennzeichnet, dass** jeder Druck- oder Kontakt-Steuereinrichtung oder jeder aktiven Stellung/Kontaktposition jeweils eine Abtast- oder Wiedergaberichtung zugeordnet ist.

4. Steuerungsvorrichtung gemäß einem der Ansprüche 1 bis 3, **dadurch gekennzeichnet, dass** ein Tastendruck, eine Betätigung oder eine Aktivierung, der/die von geringerer Dauer als der untere Grenzwert ist, eine Unterbrechung der Abtastung oder der Wiedergabe bedingt, unabhängig davon, in welche Richtung und mit welcher Geschwindigkeit dieser Vorgang verläuft.

5. Steuerungsvorrichtung gemäß einem der Ansprüche 1 bis 4, **dadurch gekennzeichnet, dass** wiederholte Tastendrucke, Betätigungen oder Aktivierungen, die von geringerer Dauer als der untere Grenzwert sind, eine Sequenzabtastung oder - wiedergabe bedingen.

6. Steuerungsvorrichtung gemäß einem der Ansprüche 1 bis 5, **dadurch gekennzeichnet, dass** der untere Grenzwert ungefähr 300 ms und der obere Grenzwert ungefähr 500 ms beträgt.

7. Steuerungsvorrichtung gemäß einem der Ansprüche 1 bis 6, **dadurch gekennzeichnet, dass** die Änderung der Abtast- oder Wiedergabegeschwindigkeit bei einem/einer anhaltende/n Tastendruck, Betätigung oder Aktivierung durch den Nutzer auch von dem Wert des ausgeführten Tastendrucks oder von der Positionierung der aktiven Stellung des Steuereinrichtung beeinflusst wird.

8. Steuerungsverfahren für die Abtastung und/oder Wiedergabe eines Mediums, insbesondere einer Audio- oder Videodokumentation, wobei das genannte Verfahren darin besteht, die Befehle des Nutzers in Form von Tastendrucken auf exakt zwei Druck- oder Kontakt-Steuereinrichtungen zu erfassen, die jeweils einer Abtast- oder Wiedergaberichtung für das Medium entsprechen, oder in Form von Tastendrucken auf eine Steuereinrichtung mit exakt zwei aktiven Stellungen oder Kontaktpositionen. Das genannte Verfahren umfasst außerdem die Umwandlung dieser Tastendrucke in entsprechende Befehle zur Unterbrechung und zur Wiedergabe oder Abtastung bei Normal- oder Standardgeschwindigkeit, wobei der jeweilige Befehlstyp durch den Vergleich der Dauer der Tastendrucke mit unteren und oberen Grenzwerten und durch die Erfassung ihres Status im Vergleich zu diesen beiden Grenzwerten bestimmt wird, **dadurch gekennzeichnet, dass** das Verfahren außerdem darin besteht, eine positive stetige Veränderung der Abtast- oder Wiedergabegeschwindigkeit in der Abtast- oder Wiedergaberichtung zu bewirken, die der betätigten Steuereinrichtung oder der erreichten Stellung der Einzelsteuereinrichtung zugeordnet ist, und dies während der gesamten Dauer des/der entsprechenden Tastendrucks, Betätigung oder Aktivierung bis zum Erreichen der maximalen Abtast- oder Wiedergabegeschwindigkeit, falls der Tastendruck, die Betätigung oder die Aktivierung der genannten Steuereinrichtungen länger anhält, als durch den oberen Grenzwert festgelegt ist.

9. Steuerungsverfahren gemäß Anspruch 8, **dadurch gekennzeichnet, dass**:
- ein Tastendruck, von kürzerer Dauer als durch den unteren Grenzwert festgelegt, die sofortige Unterbrechung der Abtastung oder der Wiedergabe bewirkt;
- eine Folge von Tastendrucken, von jeweils kürzerer Dauer als durch den unteren Grenzwert festgelegt, eine Sequenzabtastung oder -wiedergabe in der Richtung bewirkt, die der betätigten Steuereinrichtung oder der erreichten Stellung der Einzelsteuereinrichtung zugeordnet ist,
- ein Tastendruck von einer Dauer, deren Wert zwischen den beiden Grenzwerten liegt, eine Abtastung oder Wiedergabe bei Normalgeschwindigkeit in der Richtung bewirkt, die der betätigten Steuereinrichtung oder der erreichten Stellung der Einzelsteuereinrichtung zugeordnet ist, und
- ein anhaltender Tastendruck, von längerer Dauer als durch den oberen Grenzwert festgelegt, eine positive stetige Veränderung der Abtast- oder Wiedergabegeschwindigkeit in der Abtast- oder Wiedergaberichtung auslöst, die der jeweils betätigten Steuereinrichtung oder der jeweils erreichten Stellung der Einzelsteuereinrichtung zugeordnet ist, und dies außerdem bis zum Erreichen der maximalen Abtast- oder Wiedergabegeschwindigkeit, wobei die Geschwindigkeit, die zum Zeitpunkt des Lösens des Tastendrucks erreicht wurde, bis zur darauf folgenden Betätigung einer der beiden Steuereinrichtungen oder der Einzelsteuereinrichtung aufrechterhalten wird.

## Claims

1. A control device for controlling the displacement, in particular the scrolling, of a medium and/or the playback of a medium that has been recorded as a function of time, said device comprising exactly two pressure-type or contact-type control elements or one control element having exactly two active positions or contact positions, in order to transmit orders for stop, playback, scrolling at a predetermined speed to the device that ensures the scrolling or playback in two opposing directions of scrolling or playback, the durations of pressings, contacts or actions being compared, with a view to definition of the corresponding orders, to two threshold values of predetermined durations, lower and upper, which are compatible with the average execution-times of human users, **characterised in that** a prolonged pressing, contact or action on one of the control elements - that is to say, greater in duration than said upper threshold value - brings about a continuous positive variation of the speed of scrolling or playback in the direction and sense of scrolling or playback assigned to the control element actuated or to the position attained by the single control element for the entire duration of the pressing, contact or action until the maximum speed of scrolling or playback has been attained.

2. Control device according to Claim 1, **characterised in that** the speed attained at the moment of release of the pressing, contact or action on the control element under consideration is maintained until the occurrence of a new pressing, contact or action in the region of any one of the two control elements or of the single control element.

3. Control device according to any one of Claims 1 and 2, **characterised in that** a direction and a sense of scrolling or playback is assigned to each pressure-type or contact-type control element or to each active/contact position of the single control element.

4. Control device according to any one of Claims 1 to 3, **characterised in that** a pressing, contact or action of duration less then the lower threshold value brings about a stop of the scrolling or playback whatever the sense and speed of this operation.

5. Control device according to any one of Claims 1 to 4, **characterised in that** repeated pressings, contacts or actions of duration less then the lower threshold value bring about a step-by-step scrolling or playback.

6. Control device according to any one of Claims 1 to 5, **characterised in that** the lower threshold value is approximately equal to 300 ms and the upper threshold value is approximately equal to 500 ms.

7. Control device according to any one of Claims 1 to 6, **characterised in that** in the event of prolonged pressing, contact or action the variation in the speed of playback or scrolling is also influenced by the value of the pressure of the pressing of the user or by the location of the active position attained by the control element.

8. A process for controlling the scrolling and/or playback of a medium, in particular of an audio or video document, said process consisting in collecting the instructions of the user in the form of pressings on exactly two pressure-type or contact-type control elements, each corresponding to a sense of scrolling or playback of the medium, or on one control element having exactly two active positions or contact positions, said process also consisting in transforming these pressings into corresponding orders of the type represented by stop, playback or scrolling at normal or standardised speed, the determination of the types of order being realised by comparison of the durations of the pressings with lower and upper threshold values and by determination of their position in relation to these two threshold values,
**characterised in that** said process also consists in causing a continuous positive variation of the speed of scrolling or playback in the direction and sense of scrolling or playback assigned to the control element actuated or to the position attained by the single control element for the entire duration of the pressing, contact or action until the maximum speed of scrolling or playback has been attained in the event of prolonged pressing, contact or action on one of said control elements for a duration greater than said upper threshold value.

9. Control process according to Claim 8, **characterised in that**:
- a pressing of a duration less than the lower threshold value causes an immediate stop of the scrolling or playback,
- a succession of pressings each having a duration less than the lower threshold value brings about a step-by-step scrolling or playback in the sense assigned to the control element actuated or to the active position attained by the single control element,
- a pressing of a duration within the interval between the two threshold values brings about a playback or a scrolling at normal speed in the sense corresponding to the control element actuated or to the active position attained by the single control element, and,
- a pressing of a duration greater than the upper threshold generates, for as long as the pressing lasts, a continuous positive variation, in the sense of scrolling or playback corresponding to the control element actuated or to the active position attained, of the speed of scrolling or playback, at the most up to the maximum speed of scrolling or playback, the speed attained at the moment of release of the pressing being retained until the following actuation of one of the control elements or of the single control element.
